# EUROPÄISCHE PATENTSCHRIFT

(11) **EP 3 273 568 B1**
(45) Veröffentlichungstag und Bekanntmachung des Hinweises auf die Patenterteilung: **03.05.2023**
(21) Anmeldenummer: 17177425.0
(22) Anmeldetag: 22.06.2017
(51) Int. Cl.: H02J 7/00, H02J 11/00, B60L 7/10, G06Q 10/04, G06Q 50/06, B60L 53/30, B60L 58/13, H02J 7/04

(54) **VERFAHREN ZUR KAPAZITÄTSAUSLEGUNG EINER TRAKTIONSBATTERIE EINES FLURFÖRDERZEUGS**
METHOD FOR DESIGNING THE CAPACITY OF A TRACTION BATTERY OF AN INDUSTRIAL TRUCK
PROCÉDÉ DE CONCEPTION DE CAPACITÉ D'UNE BATTERIE DE TRACTION D'UN CHARIOT DE MANUTENTION

(30) Priorität: 21.07.2016 DE 102016113476
(43) Veröffentlichungstag der Anmeldung: 24.01.2018
(73) Patentinhaber: Linde Material Handling GmbH, 63749 Aschaffenburg (DE)
(72) Erfinder: BERGMANN, Marco, 63768 Hösbach (DE)
(74) Vertreter: Patentship Patentanwaltgesellschaft

(56) Entgegenhaltungen:
- EP-A1- 2 541 725
- EP-A1- 2 882 064
- US-A1- 2007 139 012
- US-A1- 2008 277 173
- US-A1- 2014 232 340
- JEONG JONGRYEOL ET AL: "Analysis of fuel economy and battery life depending on the types of HEV using dynamic programming", 2013 WORLD ELECTRIC VEHICLE SYMPOSIUM AND EXHIBITION (EVS27), IEEE, 17 November 2013 (2013-11-17), pages 1-5, XP032654132, DOI: 10.1109/EVS.2013.6914898 [retrieved on 2014-10-01]

## Beschreibung

Die Erfindung betrifft ein Computerprogramm, das in den Arbeitsspeicher eines Computers geladen und aufgerufen ein Verfahren zur Auslegung der Kapazität einer Traktionsbatterie eines Flurförderzeugs durchführt.

Bei Flurförderzeugen, wie beispielsweise Gegengewichtsgabelstaplern, Schubmaststaplern und Lagertechnikgeräten, kommen im Fall eines batterieelektrischen Antriebs nach dem bisherigen Stand der Technik überwiegend auswechselbare Traktionsbatterien zum Einsatz. Diese Traktionsbatterien sind in herkömmlicher Ausführung als Blei-Säurebatterie ausgeführt. Es ist dabei im Mehrschichtbetrieb üblicher Standard, dass die Traktionsbatterie beim Schichtwechsel zum Laden aus einem Batteriefach entnommen und gegen eine aufgeladene Traktionsbatterie ausgewechselt wird, oder im Einschichtbetrieb der Fahrer gegen Ende seiner Arbeitsschicht ein Ladegerät über eine Steckerverbindung mit der Traktionsbatterie verbindet, um diese während der Arbeitspause aufzuladen.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen dass sie gegenüber einem Blei-Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und vorallem mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Zunehmend in größerem Umfang eingesetzt werden als Beispiel solcher Hochleistungsbatterien Lithium-lonenbatterien, die sich durch hohe Energiedichte auszeichnen, nur einem geringen Memoryeffekt unterliegen und ein Entladen der Batterie bzw. Aufladen der Batterie mit großer Leistung ermöglichen.

Besonders vorteilhaft ist der Einsatz solcher Hochleistungsbatterien bei Flurförderzeugen, da aufgrund der hohen Energiedichte in Bezug auf das Volumen bei dem vorgegebenen Bauraum für die Traktionsbatterie eine größere Menge elektrische Energie gespeichert werden kann und somit die Reichweite eines Fahrzeugs bzw. die Einsatzdauer des Flurförderzeugs vergrößert werden kann. Insbesondere ist es jedoch möglich, solche Hochleistungsbatterien und vor allem Lithium-Ionenbatterien zwischenzuladen und somit kurze Arbeitspausen oder sonstige Möglichkeiten zum Wiederaufladen der Traktionsbatterie zu nutzen. Durch ein Zwischenladen wird es auch möglich, eine kleinere Kapazität für die Traktionsbatterie zu wählen und dadurch Kosten einzusparen. Besonders vorteilhaft wirkt sich dabei aus, dass ein häufiges Zwischenladen gerade Lithium-lonenbatterien nicht schädigt und ohne übermäßigen zusätzlichen Batteriealterung oder Memoryeffekte durchgeführt werden kann.

Nachteilig an solchen Hochleistungsbatterien und insbesondere Lithium-Ionenbatterien ist jedoch, dass die Anschaffung oder auch ein Leasing bzw. eine Miete einer solchen Traktionsbatterie einen großen Kostenfaktor für den Nutzer darstellt, aufgrund der erheblich höheren Herstellungskosten gegenüber etwa einer herkömmlichen Blei-Säurebatterie. Daher ist es für die Optimierung der Kosten wünschenswert, die Kapazität der Traktionsbatterie möglichst optimal auszulegen, sodass diese abhängig von den zur Verfügung stehenden Zeiträumen für ein Zwischenladen und den dazwischen liegenden Leistungsanforderungen die gerade hierfür erforderliche Kapazität aufweist.

Die erforderliche Kapazität ist jedoch nur schwer einschätzbar. Daher ist es wünschenswert, um eine kostenoptimierte, auf einen Kunden zugeschnittene Lösung mit einer optimierten Batteriekapazität anzubieten, wenn ein Verfahren zur Bestimmung einer solchen Batteriekapazität bereits im Vorfeld des möglichen Einsatzes eines Flurförderzeugs zur Verfügung steht.

Aus der EP 2 541 725 A1 ist ein Lademanagementsystem einer Li-lon-Batterie in einem Flurförderzeug bekannt. Eine Fahrplanvorbereitungseinheit erstellt einen Fahrplan für das Flurförderzeug und eine Verwaltungseinheit gibt entsprechend dem Fahrplan Befehle an das Flurförderzeug.

Aus der US 2014/232340 A1 ist ein Verwaltungssystem einer Flotte von batteriebetriebenen Fahrzeugen bekannt. Wenn eine Bedienperson die Anzeige erhält, dass die Batterie in seinem Fahrzeug leer ist, wird das Fahrzeug zu einem Fahrzeug-Ladebereich gebracht und zum Laden angeschlossen. Der Bedienperson wird dann mitgeteilt, welches Fahrzeug sie als nächstes nehmen soll.

Der Erfindung liegt die Aufgabe zugrunde, ein Computerprogramm mit einem Verfahren zur Bestimmung einer mindestens erforderlichen Kapazität einer Traktionsbatterie eines Flurförderzeugs zur Verfügung zu stellen, das die zuvor genannten Nachteile vermeidet und mit dem eine für einen Einsatzzweck minimale, aber ausreichende Kapazität bestimmt werden kann.

Diese Aufgabe wird durch ein Computerprogramm mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß durch ein Computerprogramm gelöst, das in den Arbeitsspeicher eines Computers geladen und aufgerufen ein Verfahren zur Bestimmung einer mindestens erforderlichen Kapazität einer Traktionsbatterie eines batterieelektrisch angetriebenen Flurförderzeugs mit den Schritten durchführt:
- Erstellen eines einer Simulation entsprechenden Nutzungsmodells eines Flurförderzeugs über einen Modellierungszeitraum,
   wobei dem Nutzungsmodell ein Betriebsparametersatz zu Grunde liegt, der aus einer Abfolge von Betriebspausen, Betriebszeiten und Batterieladezeiten für das Flurförderzeug während des Modellierungszeitraums besteht,
   wobei der Betriebsparametersatz durch eine Erfassungsvorrichtung im Betrieb eines realen Flurförderzeugs erfasst wird,
- Berechnen des simulierten Verlaufs der Ladung einer Traktionsbatterie über den zeitlichen Verlauf des Nutzungsmodells aufgrund des Verbrauchs in Betriebszeiten und der Ladung während der simulierten Batterieladezeiten und eventuell weiterer Parameter des Betriebsparametersatzes,
- Ausführen eine Mehrzahl von Simulationen mit verschiedenen Parametern zur Ermittlung einer optimalen Kapazität der Traktionsbatterie,
- Bestimmen einer Ladungsdifferenz zwischen minimalem Wert des simulierten Verlaufs der Ladung und maximalem Wert des simulierten Verlaufs der Ladung in dem Modellierungszeitraum und
- Festlegen einer mindestens erforderlichen Kapazität entsprechend dem Wert, der die Ladungsdifferenz speichern kann,

wobei die Bestimmung der mindestens erforderlichen Kapazität der Traktionsbatterie mittels einer Simulationsrechnung im Vorfeld eines Einsatzes des Flurförderzeugs ausgeführt wird,
wobei in den Betriebszeiten ein unterschiedlicher Stromverbrauch berücksichtigt wird.

Vorteilhaft kann dadurch beispielsweise durch einen Verkäufer eines Flurförderzeugs im Rahmen einer Simulationsrechnung bestimmt werden, welche Batteriekapazität der Traktionsbatterie mindestens erforderlich ist. Ein Berater oder Verkäufer muss sich nicht mehr nur auf Aussagen und Einschätzungen der Kunden und Fahrer verlassen. Da moderne Hochleistungsbatterie und insbesondere Lithium-Ionen Batterien relativ teuer gegenüber herkömmlichen Blei-Säurebatterie sind und deren Preis mit der Kapazität sehr stark anwächst, ergibt sich ein großes Optimierungspotenzial. Aufgrund des Betriebsparametersatzes wird dabei ein Nutzungsmodell erstellt, das eine Abfolge von Betriebspausen mit dem jeweiligen Startzeitpunkt, Betriebszeiten mit dem jeweiligen Startzeitpunkt und Batterieladezeiten mit dem jeweiligen Startzeitpunkt umfasst. Beispielsweise kann das allgemeine Aufladen am Ende einer Schicht oder in einer Pause zwischen zwei Schichten als letzter Zeitraum einer solchen Simulation in der zeitlichen Abfolge berücksichtigt werden. Dabei kann der Betriebsparametersatz sowohl allgemein als Standardmodell für typische Betriebsabläufe verwendet werden, manuell angepasst werden, manuell eingegeben werden oder aber auch aufgrund des Erfassens üblicher Fahrbewegungen in einer bestimmten Betriebsumgebung erstellt werden. Die Simulationsrechnung kann dabei beispielsweise auf einem üblichen Rechner, wie beispielsweise einem Notebook, durchgeführt werden.

Neben dem für die Simulationsrechnung erforderlichen, ganz allgemein notwendig zu berücksichtigenden Stromverbrauch während Betriebszeiten, wird auch ein unterschiedlicher Stromverbrauch, beispielsweise unterschieden zwischen reiner Fahrt, oder reinen Stapelarbeiten bei einem Gabelstapler berücksichtigt.

Zu der mindestens erforderlichen Kapazität kann noch ein Sicherheitszuschlag hinzugefügt werden.

Vorteilhaft werden die Betriebszeiten in Fahrzeiten und/oder Betriebszeiten einer Arbeitsvorrichtung aufgeschlüsselt.

Neben Pausen oder Zeiten des Fahrzeugstillstands, die beispielsweise durch andere Tätigkeiten des Fahrers wie Büroarbeiten oder Ähnliches entstehen, können in dem Nutzungsmodell insbesondere Fahrzeiten ohne Pause und deren Dauer berücksichtigt werden.

Vorteilhaft wird der Stromverbrauch abhängig von den Eigenschaften des Flurförderzeugs berücksichtigt.

Beispielsweise können die Grundparameter verschiedener Flurförderzeuge wie auch Fahrzeugversionen dadurch berücksichtigt werden.

In einer günstigen Ausgestaltung des Verfahrens wird der Stromverbrauch abhängig von einer Nutzungsintensität berücksichtigt.

Beispielsweise können bei unterschiedlichen Betriebsgeländen aufgrund etwa unterschiedlicher Stapelhöhen eines Gabelstaplers sich unterschiedliche Stromverbräuche ergeben und berücksichtigt werden.

In einer Ausgestaltung des Verfahrens werden unterschiedliche Ladeströme für die Batterieladezeiten berücksichtigt.

Dies ergibt die Möglichkeit, für verschiedene Batteriekapazitäten in Verbindung mit verschiedenen Ladegeräten Simulationen durchzuführen.

Der Betriebsparametersatz kann Parameter zu physikalischen Eigenschaften der Traktionsbatterie enthalten, insbesondere zu einer Standzeit der Traktionsbatterie und/oder einer Alterung der Traktionsbatterie.

Es können verschiedene Nutzungsmodelle bei wiederholter Durchführung des Verfahrens genutzt werden.

Durch solche alternativen Simulationen kann ein Optimum gewählt werden zwischen Batteriekapazität und/oder Leistung eines Ladegerätes oder aber auch Anzahl und Positionierung von Ladegeräten mit der Möglichkeit des Zwischenladens in einer größeren Anzahl von Pausen

In einer Weiterbildung des Verfahrens können Parameter des Betriebsparametersatzes manuell geändert werden.

Der Betriebsparametersatz wird durch eine Erfassungsvorrichtung im Betrieb eines realen Flurförderzeugs erfasst.

Vorteilhaft ist die Erfassungsvorrichtung eine mobile Auswerteeinheit, die auf dem Flurförderzeug montiert und/oder an diesem befestigt wird.

In einem Testzeitraum können somit die erforderlichen Parameter für einen Betriebsparametersatz erfasst werden und es kann eine sehr individuelle Anpassung auf ein bestimmtes Betriebsgelände und Nutzungsverhalten des Flurförderzeugs erfolgen.

Weitere Vorteile und Einzelheiten der Erfindung werden anhand der in den schematischen Figuren dargestellten Ausführungsbeispiele näher erläutert. Hierbei zeigt
- Fig. 1: den Verlauf der Ladung einer Traktionsbatterie im zeitlichen Verlauf über drei Tage entsprechend einer Simulation nach dem erfindungsgemäßen Verfahren und
- Fig. 2: den Verlauf der Ladung einer Traktionsbatterie im zeitlichen Verlauf über 3 Tage entsprechend einer weiteren Simulation nach dem erfindungsgemäßen Verfahren.

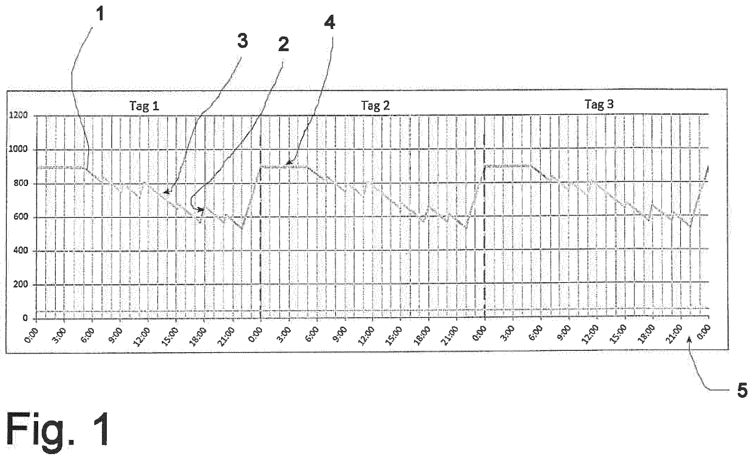

Die Fig. 1 zeigt den Verlauf der Ladung 1 einer Traktionsbatterie im zeitlichen Verlauf über drei Tage als Modellierungszeitraum 5 entsprechend einer Simulation nach dem erfindungsgemäßen Verfahren. Über den Uhrzeiten ist dabei der Ladezustand der Traktionsbatterie aufgetragen. In vielen Pausen erfolgt ein Zwischenladen, entsprechend Batterieladezeiten 2, wie an der wieder ansteigenden Linie erkennbar ist. Gegen Ende der Schicht erfolgt eine längere Ladezeit bis zu einer maximalen Ladung und dem erneuten Arbeitsbeginn um 6:00 Uhr. Aus der Differenz zwischen minimalem Wert und maximalen Wert kann eine notwendige Kapazität der Traktionsbatterie bestimmt werden, zu der noch ein Sicherheitszuschlag erfolgen kann.

Parameter des dargestellten Beispiels sind beispielsweise der Beginn des Arbeitstages um 5:00 Uhr, die Arbeitszeit pro Tag von 17 Stunden mit 11 Betriebsstunden pro Tag entsprechend einem durchschnittlichen Nutzungsgrad von 65 %. In dem vorliegenden Beispiel ergeben sich Pausenzeiten für eine Zwischenladung, die somit Batterieladezeiten entsprechen, ein erstes Mal um 7 Uhr für 15 Minuten, ein zweites Mal um 9 Uhr für 25 Minuten, ein drittes Mal um 11 Uhr für 50 Minuten, ein viertes Mal um 15 Uhr für 15 Minuten und ein letztes Mal um 17:30 Uhr für 50 Minuten. In dazwischenliegenden Betriebszeiten 3 sinkt die Ladung ab. Nach dem Ende der Schicht während der Nacht bleibt die Ladung während einer Betriebspause 4 konstant.

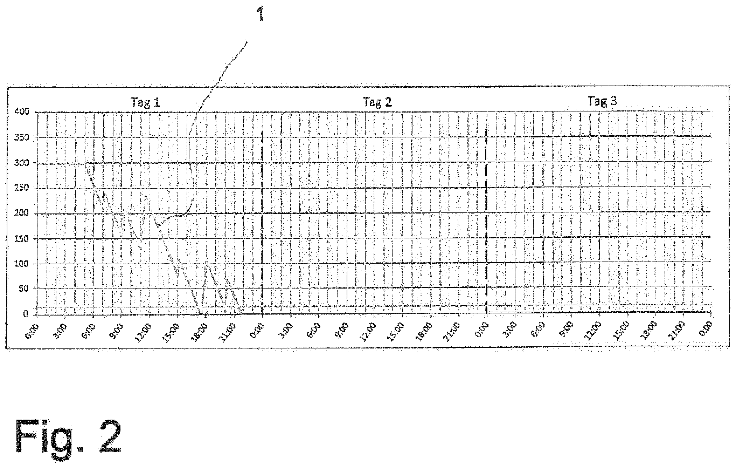

Die Fig. 2 zeigt den Verlauf der Ladung 1 einer Traktionsbatterie im zeitlichen Verlauf über drei Tage entsprechend einer weiteren Simulation nach dem erfindungsgemäßen Verfahren. Bei dieser Simulation fällt der Verlauf der Ladung 2 zu stark ab. Es muss ein stärkeres Ladegerät verwendet werden, oder eine Traktionsbatterie mit einer größeren Kapazität wird notwendig, um das Schichtende zu erreichen.

## Patentansprüche

1. Computerprogramm, das in den Arbeitsspeicher eines Computers geladen und aufgerufen ein Verfahren zur Bestimmung einer mindestens erforderlichen Kapazität einer Traktionsbatterie eines batterieelektrisch angetriebenen Flurförderzeugs mit den Schritten durchführt:
- Erstellen eines einer Simulation entsprechenden Nutzungsmodells eines Flurförderzeugs über einen Modellierungszeitraum (5),
wobei dem Nutzungsmodell ein Betriebsparametersatz zu Grunde liegt, der aus einer Abfolge von Betriebspausen (4), Betriebszeiten (3) und Batterieladezeiten (2) für das Flurförderzeug während des Modellierungszeitraums (5) besteht,
wobei der Betriebsparametersatz durch eine Erfassungsvorrichtung im Betrieb eines realen Flurförderzeugs erfasst wird,
- Berechnen des simulierten Verlaufs der Ladung (1) einer Traktionsbatterie über den zeitlichen Verlauf des Nutzungsmodells aufgrund des Verbrauchs in Betriebszeiten (3) und der Ladung während der simulierten Batterieladezeiten (2) und eventuell weiterer Parameter des Betriebsparametersatzes,
- Ausführen eine Mehrzahl von Simulationen mit verschiedenen Parametern zur Ermittlung einer optimalen Kapazität der Traktionsbatterie,
- Bestimmen einer Ladungsdifferenz zwischen minimalem Wert des simulierten Verlaufs der Ladung und maximalem Wert des simulierten Verlaufs der Ladung in dem Modellierungszeitraum (5) und
- Festlegen einer mindestens erforderlichen Kapazität entsprechend dem Wert, der die Ladungsdifferenz speichern kann,
wobei die Bestimmung der mindestens erforderlichen Kapazität der Traktionsbatterie mittels einer Simulationsrechnung im Vorfeld eines Einsatzes des Flurförderzeugs ausgeführt wird,
wobei in den Betriebszeiten (3) ein unterschiedlicher Stromverbrauch berücksichtigt wird.

2. Computerprogramm nach Anspruch 1,
**dadurch gekennzeichnet,**
**dass** zu der mindestens erforderlichen Kapazität noch ein Sicherheitszuschlag hinzugefügt wird.

3. Computerprogramm nach Anspruch 1 oder 2,
**dadurch gekennzeichnet,**
**dass** die Betriebszeiten (3) in Fahrzeiten und/oder Betriebszeiten (3) einer Arbeitsvorrichtung aufgeschlüsselt werden.

4. Computerprogramm nach einem der Ansprüche 1 bis 3,
**dadurch gekennzeichnet,**
**dass** der Stromverbrauch abhängig von den Eigenschaften des Flurförderzeugs berücksichtigt wird.

5. Computerprogramm nach einem der Ansprüche 1 bis 4,
**dadurch gekennzeichnet,**
**dass** der Stromverbrauch abhängig von einer Nutzungsintensität berücksichtigt wird.

6. Computerprogramm nach einem der Ansprüche 1 bis 5,
**dadurch gekennzeichnet,**
**dass** unterschiedliche Ladeströme für die Batterieladezeiten (2) berücksichtigt werden.

7. Computerprogramm nach einem der Ansprüche 1 bis 6,
**dadurch gekennzeichnet,**
**dass** der Betriebsparametersatz Parameter zu physikalischen Eigenschaften der Traktionsbatterie enthält, insbesondere zu einer Standzeit der Traktionsbatterie und/oder einer Alterung der Traktionsbatterie.

8. Computerprogramm nach einem der Ansprüche 1 bis 7,
**dadurch gekennzeichnet,**
**dass** verschiedene Nutzungsmodelle bei wiederholter Durchführung des Verfahrens genutzt werden.

9. Computerprogramm nach einem der Ansprüche 1 bis 8,
**dadurch gekennzeichnet,**
**dass** Parameter des Betriebsparametersatzes manuell geändert werden können.

10. Computerprogramm nach einem der Ansprüche 1 bis 9,
**dadurch gekennzeichnet,**
**dass** die Erfassungsvorrichtung eine mobile Auswerteeinheit ist, die auf dem Flurförderzeug montiert und/oder an diesem befestigt wird.

## Claims

1. Computer program that, when loaded into the main memory of a computer and called, carries out a method for determining a minimum required capacity of a traction battery of an industrial truck driven by electric battery, comprising the steps of:
- creating a usage model, which corresponds to a simulation, of an industrial truck over a modelling period (5),
wherein the usage model is based on an operating parameter set that consists of a sequence of operating pauses (4), operating times (3) and battery charging times (2) for the industrial truck during the modelling period (5),
wherein the operating parameter set is captured by a capture device during operation of a real industrial truck,
- calculating the simulated profile of the charge (1) of a traction battery over the temporal profile of the usage model on the basis of the consumption in operating times (3) and the charge during the simulated battery charging times (2) and possibly further parameters of the operating parameter set,
- performing a plurality of simulations with different parameters for ascertaining an optimum capacity of the traction battery,
- determining a charge difference between the minimum value of the simulated profile of the charge and the maximum value of the simulated profile of the charge in the modelling period (5), and
- defining a minimum required capacity in accordance with the value that can store the charge difference,
wherein the determination of the minimum required capacity of the traction battery is performed by means of a simulation calculation in advance of the industrial truck being used,
wherein a different power consumption is taken into consideration in the operating times (3).

2. Computer program according to Claim 1,
**characterized**
**in that** a safety margin is additionally added to the minimum required capacity.

3. Computer program according to Claim 1 or 2,
**characterized**
**in that** the operating times (3) are broken down into driving times and/or operating times (3) of a working device.

4. Computer program according to one of Claims 1 to 3,
**characterized**
**in that** the power consumption is taken into consideration depending on the properties of the industrial truck.

5. Computer program according to one of Claims 1 to 4,
**characterized**
**in that** the power consumption is taken into consideration depending on a usage intensity.

6. Computer program according to one of Claims 1 to 5,
**characterized**
**in that** different charging currents are taken into consideration for the battery charging times (2).

7. Computer program according to one of Claims 1 to 6,
**characterized**
**in that** the operating parameter set contains parameters relating to physical properties of the traction battery, in particular relating to a service life of the traction battery and/or aging of the traction battery.

8. Computer program according to one of Claims 1 to 7,
**characterized**
**in that** different usage models are used upon repeated performance of the method.

9. Computer program according to one of Claims 1 to 8,
**characterized**
**in that** parameters of the operating parameter set can be changed manually.

10. Computer program according to one of Claims 1 to 9,
**characterized**
**in that** the capture device is a mobile evaluation unit that is installed on and/or fastened to the industrial truck.

## Revendications

1. Programme informatique, qui est chargé dans la mémoire de travail d'un ordinateur et qui, lorsqu'il est invoqué, met en œuvre un procédé de détermination d'une capacité minimale nécessaire d'une batterie de traction d'un chariot de manutention à propulsion électrique par batterie qui comprend les étapes suivantes :
- création d'un modèle d'utilisation d'un chariot de manutention correspondant à une simulation sur une période de modélisation (5),
le modèle d'utilisation s'appuyant sur un jeu de paramètres d'exploitation qui se compose d'une séquence de pauses de fonctionnement (4), de temps de fonctionnement (3) et de temps de charge de batterie (2) pour le chariot de manutention pendant la période de modélisation (5),
le jeu de paramètres d'exploitation étant acquis par un dispositif d'acquisition en fonctionnement d'un chariot de manutention réel,
- calcul de l'évolution simulée de la charge (1) d'une batterie de traction en fonction de l'évolution dans le temps du modèle d'utilisation sur la base de la consommation en temps de fonctionnement (3) et de la charge pendant les temps de charge de batterie (2) simulés et éventuellement d'autres paramètres du jeu de paramètres d'exploitation,
- exécution d'une pluralité de simulations avec différents paramètres en vue d'identifier une capacité optimale de la batterie de traction,
- détermination d'une différence de charge entre la valeur minimale de l'évolution simulée de la charge et la valeur maximale de l'évolution simulée de la charge dans la période de modélisation (5) et
- spécification d'une capacité minimale nécessaire conformément à la valeur qui peut accumuler la différence de charge,
la détermination de la capacité minimale nécessaire de la batterie de traction étant réalisée au moyen d'un calcul de simulation en phase préliminaire d'une utilisation'du chariot de manutention,
une consommation de courant différente étant prise en compte dans les temps de fonctionnement (3).

2. Programme informatique selon la revendication 1, **caractérisé en ce qu'**un supplément de sécurité est encore ajouté à la capacité minimale nécessaire.

3. Programme informatique selon la revendication 1 ou 2, **caractérisé en ce que** les temps de fonctionnement (3) sont répartis en temps de déplacement et/ou temps de fonctionnement (3) d'un dispositif de travail.

4. Programme informatique selon l'une des revendications 1 à 3, **caractérisé en ce que** la consommation de courant est prise en compte en fonction des propriétés du chariot de manutention.

5. Programme informatique selon l'une des revendications 1 à 4, **caractérisé en ce que** la consommation de courant est prise en compte en fonction d'une intensité d'utilisation.

6. Programme informatique selon l'une des revendications 1 à 5, **caractérisé en ce que** différents courants de charge sont pris en compte pour les temps de charge de batterie (2).

7. Programme informatique selon l'une des revendications 1 à 6, **caractérisé en ce que** le jeu de paramètres d'exploitation contient des paramètres à propos des propriétés physiques de la batterie de traction, notamment à propos d'une durée de vie de la batterie de traction et/ou d'un vieillissement de la batterie de traction.

8. Programme informatique selon l'une des revendications 1 à 7, **caractérisé en ce que** différents modèles d'utilisation sont utilisés lors d'une mise en œuvre répétée du procédé.

9. Programme informatique selon l'une des revendications 1 à 8, **caractérisé en ce que** les paramètres du jeu de paramètres d'exploitation peuvent être modifiés manuellement.

10. Programme informatique selon l'une des revendications 1 à 9, **caractérisé en ce que** le dispositif d'acquisition est une unité d'interprétation mobile qui est montée sur le chariot de manutention et/ou est fixée à celui-ci.
